# EUROPÄISCHE PATENTANMELDUNG

(11) **EP 2 256 940 A2**
(43) Veröffentlichungstag der Anmeldung: **01.12.2010**
(21) Anmeldenummer: 10006903.8
(22) Anmeldetag: 14.01.2004
(51) Int. Cl.: H04B 1/38, H04W 52/24

(54) **Mobilfunkendgerät**

(30) Priorität: 11.03.2003 DE 10311675
(62) Teilanmeldung aus: 04000563.9
(71) Anmelder: Aastra DeTeWe GmbH, 10997 Berlin (DE)
(72) Erfinder: Balow, Peter, Dipl.-Ing., 12559 Berlin (DE); Petersen, Mike, Dipl.-Ing., 24582 Wattenbek (DE)
(74) Vertreter: Fischer, Uwe

(57) **Zusammenfassung**

Die Erfindung bezieht sich auf ein Mobilfunkendgerät (10, 100, 200, 300, 400) mit einer Sendeeinrichtung (20), die zumindest nach einem vorgegebenen Mobilfunkstandard, insbesondere dem DECT-Standard, arbeitet, wobei das Mobilfunkendgerät (10, 100, 200, 300, 400) zumindest zwei Betriebsarten aufweist, nämlich eine Normalbetriebsart und mindestens eine weitere Betriebsart, bei der im Vergleich zur Normalbetriebsart zumindest im zeitlichen Mittel weniger elektromagnetische Strahlung erzeugt wird als in der Normalbetriebsart.

Erfindungsgemäß ist vorgesehen, dass das Mobilfunkendgerät (200) derart ausgestaltet ist, dass es mit zumindest zwei Sendeleistungspegeln betrieben werden kann, wobei der jeweilige Sendeleistungspegel von der Übertragungsqualität der Verbindung zwischen der Mobilfunkeinrichtung (200) und der zugeordneten Basisstation bestimmt ist.

## Beschreibung

Die Erfindung bezieht sich auf ein Mobilfunkendgerät mit einer Sendeeinrictitung, die zumindest nach einem vorgegebenen Mobilfunkstandard, insbesondere beispielsweise nach dem DECT-Standard, arbeitet.

Derartige Mobilfunkendgeräte sind allgemein bekannt und im Handel erhältlich.

Der Erfindung liegt die Aufgabe zugrunde, Mobilfunkendgeräte der eingangs angegebenen Art zu verbessern; insbesondere soll die gesundheitliche Belastung bei der Benutzung derartiger Geräte reduziert werden.

Diese Aufgabe wird erfindungsgemäß durch die kennzeichnenden Merkmale des Anspruchs 1 gelöst. Vorteilhafte Ausgestaltungen des erfindungsgemäßen Mobilfunkendgeräts sind in Unteransprüchen angegeben.

Erfindungsgemäß ist vorgesehen, dass das Mobilfunkendgerät derart ausgestaltet ist, dass es mit zumindest zwei Sendeleistungspegeln betrieben werden kann, wobei der jeweilige Sendeleistungspegel von der Empfangsqualität der Verbindung zwischen dem Mobilfunkendgerät und der Basisstation bestimmt wird.

Das Umschalten des Sendeleistungspegels kann dabei beispielsweise von der Basisstation vorgegeben sein; hierzu ist das Mobilfunkendgerät vorzugsweise derart auszugestalten, dass es nach einem Empfangen eines Steuersignals der Basisstation den jeweils von der Basisstation mittels des Steuersignals vorgegebenen Sendeleistungspegel einstellt.

Alternativ kann der jeweilige Sendeleistungspegel des Mobilfunkendgerätes aber auch unmittelbar von-dem Mobilfunkendgerät-selbst bestimmt werden. Dies lässt sich besonders einfach und damit vorteilhaft dann erreichen, wenn das Mobilfunkendgerät die jeweilige Empfangsqualität der von der Basisstation gesendeten und vom Mobilfunkendgerät empfangenen Signale misst und den Sendeleistungspegel entsprechend derart einstellt, dass bei schlechter Empfangsqualität ein hoher Sendeleistungspegel und bei guter Empfangsqualität ein niedriger Sendeleistungspegel ausgewählt wird.

Als Maß für die Empfangsqualität kann dabei der Signalpegel des Empfangssignals herangezogen werden; vorteilhaft wird die Höhe des Signalpegels des Empfangssignals unmittelbar als Maß für die Empfangsqualität interpretiert und als solche bewertet.

Zusammengefasst lässt sich damit feststellen, dass bei dem erfindungsgemäßen Mobilfunkendgerät die weitere Betriebsart, also die Betriebsart mit reduzierter Strahlungserzeugung, sich dadurch auszeichnet, dass die von dem Mobilfunkendgerät erzeugte Sendeleistung abhängig von der "Empfangsstrecke" zwischen dem Mobilfunkendgerät und der Basisstation gewählt wird; bei schlechten Übertragungsbedingungen, also bei einer schlechten oder sehr langen Übertragungsstrecke, wird mit hoher Sendeleistung gesendet, wohingegen bei einer guten - insbesondere kurzen - Übertragungsstrecke eine niedrige Sendeleistung gewählt wird.

Ein wesentlicher Vorteil des erfindungsgemäßen Mobilfunkendgerätes ist darin zu sehen, dass dieses zu einer insgesamt geringeren gesundheitlichen Belastung für einen Benutzer des Mobilfunkendgerätes führt, als dies bei den bisher bekannten und im Handel erhältlichen Mobilfunkendgeräten der Fall ist. Dies wird konkret dadurch erreicht, dass das erfindungsgemäße Mobilfunkendgerät mindestens eine weitere Betriebsart aufweist, bei der weniger elektromagnetische Strahlung erzeugt wird als im Normalbetrieb. Je nach den Erfordernissen im Einzelfall kann das Mobilfunkendgerät somit in der Normalbetriebsart betrieben werden, wenn dies erforderlich ist - beispielsweise bei schlechten Empfangsbedingungen oder dergleichen - oder wahlweise stattdessen in der weiteren Betriebsart, bei der weniger Strahlung erzeugt wird. Die weitere Betriebsart mit reduzierter Strahlung kann dann also eingeschaltet bzw. eingesetzt werden, sobald dies im Einzelfall möglich ist. Die weitere Betriebsart könnte somit beispielsweise als "Öko-Betrieb" bzw. "Gesundheitsbetrieb" bezeichnet werden.

Das Umschalten des Mobilfunkendgerätes von der Normalbetriebsart in die mindestens eine weitere Betriebsart oder umgekehrt kann bevorzugt selbsttätig erfolgen oder benutzerseitig durch ein Umschalten der Betriebsarten initiiert werden.

Auch kann vorgesehen sein, dass das Mobilfunkendgerät derart ausgestaltet ist, dass die Sendeeinrichtung abgeschaltet wird, sobald das Mobilfunkendgerät mit einer Ladeschale einer dem Mobilfunkendgerät zugeordneten Basisstation in Verbindung tritt. Sobald die Sendeeinrichtung abgeschaltet ist, befindet sich das Mobilfunkendgerät damit in einer "weiteren" Betriebsart, die sich von dem Normalbetrieb dadurch unterscheidet, dass die Sendeeinrichtung abgeschaltet ist und kein Sendebetrieb mehr stattfindet. Ein wesentlicher Vorteil dieser Variante des Mobilfunkendgerätes ist darin zu sehen, dass auf das Erzeugen "unnützer" elektromagnetischer Strahlung vollkommen verzichtet wird. Befindet sich das Mobilfunkendgerät nämlich in der Ladeschale, so ist keine Funkverbindung zwischen dem Mobilfunkendgerät und der der Ladeschale zugeordneten Basisstation erforderlich, da eine elektrische Verbindung zwischen dem Mobilfunkendgerät und der Basisstation beispielsweise über die vorhandenen Ladekontakte besteht und diese zur Übertragung von Datensignalen - beispielsweise auch Synchronisationssignalen - benutzt werden können.

Zum Abschalten der Sendeeinrichtung in der weiteren Betriebsart kann das Mobilfunkendgerät vorteilhaft einen mechanischen Schaltkontakt bzw. eine Software-seitige Erkennung und Umschaltung aufweisen, der bzw. die bei Auflegen des Mobilfunkendgerätes auf der Ladeschale bzw. beim Einfügen des Mobilfunkendgeräts in die Ladeschale der Basisstation die Sendeeinrichtung elektrisch abschaltet.

Alternativ kann die Sendeeinrichtung des Mobilfunkendgerätes abgeschaltet werden, sobald die Ladekontakte des Mobilfunkendgerätes mit den Ladekontakten der Basisstation elektrisch kontaktieren. Beispielsweise kann das Mobilfunkendgerät seine Sendeeinrichtung abschalten, sobald ein Ladestrom von der Ladeschale zu dem Mobilfunkendgerät fließt. Konkret kann das Abschalten der Sendeeinrichtung in dem Mobilfunkendgerät beispielsweise durch eine Überwachungsschaltung erfolgen, die den Ladestrom des Mobilfunkendgerätes überwacht und bei Fließen eines Stromes die Sendeeinrichtung deaktiviert.

Darüber hinaus kann das Mobilfunkendgerät der Basisstation - beispielsweise über die Ladekontakte und/oder über separate Zusatzkontakte mitteilen, dass es in der Ladestation liegt und dass seine Sendeeinrichtung ausgeschaltet ist. Falls an der Basisstation lediglich ein einziges Mobilfunkendgerät angemeldet sein sollte - nämlich somit das in der Ladeschale liegende - , könnte die Basisstation dann ihrerseits ihre Sendeeinrichtung ebenfalls abschalten.

Alternativ kann die Basisstation den Ladestrom der Ladeschale selbst überwachen und bei Vorliegen eines Ladestroms ihre eigene Sendeeinrichtung ausschalten; in diesem Fall übermittelt die Basisstation - beispielsweise über die Ladekontakte und/oder über zusätzliche Kontakte - dem Mobilfunkendgerät dann ein Steuersignal zum Abschalten der mobilfunkendgeräteseitigen Sendeeinrichtung, woraufhin das Mobilfunkendgerät dann seine Sendeeinrichtung abschaltet. Für diese Ausgestaltung der Erfindung muss -das Mobilfunkendgerät somit geeignet sein, ein solches Steuersignal der Basisstation zu erkennen und bei Vorliegen eines solchen Steuersignals seine Sendeeinrichtung abzuschalten.

Ein Aktivieren der zuvor deaktivierten Sendeeinrichtung kann dabei beispielsweise von der Basisstation initiiert werden, indem sie ein Aufwecksignal generiert und elektrisch zum Mobilfunkendgerät überträgt. Um ein solches Aufwecken zu ermöglichen, ist das Mobilfunkendgerät bevorzugt derart ausgestaltet, dass es bei Vorliegen eines von der Basisstation generierten und elektrisch zum Mobilfunkendgerät übertragenen Aufwecksignals den Sendebetrieb wieder aufnimmt. Eine Synchronisation zwischen dem "aufgeweckten" Mobilfunkendgerät und der Basisstation kann dabei beispielsweise auf dem "Funkwege" erfolgen; stattdessen ist es auch möglich, dass eine Synchronisation über elektrische Synchronisationssignale erfolgt, die zwischen dem in der Ladeschale befindlichen Mobilfunkendgerät und der Basisstation auf elektrischem Wege (z. B. über eine Kabelverbindung) ausgetauscht werden.

Die Übertragung des Aufwecksignals von der Basisstation zu dem Mobilfunkendgerät kann vorzugsweise über die Ladekontakte erfolgen; werden nämlich die Ladekontakte zur Übertragung des Aufwecksignals verwendet, so kann auf zusätzliche Kontakte zur Übertragung des Aufwecksignals verzichtet werden.

Gemäß einer weiteren Variante des Mobilfunkendgerätes ist vorgesehen, dass das Mobilfunkendgerät während eines Telefonates ausschließlich dann elektromagnetische Strahlung erzeugt, wenn benutzerseitig Sprachsignale erzeugt werden. Bei dieser Variante der Erfindung wird also auf das Übersenden "unnützer" elektromagnetischer Strahlung verzichtet, indem das Aussenden der Strahlung ausschließlich auf die Zeitbereiche beschränkt wird, in denen tatsächlich "Nutzdaten" bzw. "Nutzsprachsignale" zu übertragen sind.

Bevorzugt weist das Mobilfunkendgerät hierfür eine Sprachfiltereinrichtung (beispielsweise eine Spracherkennungseinrichtung) auf, die Sprachsignale von übrigen akustischen Signalen - wie z. B. "Hintergrundrauschen" - trennt und ausschließlich die Sprachsignale an die Sendeeinrichtung weiterleitet.

Bei dieser weiteren Variante der Erfindung ist also vorgesehen, das Aussenden elektromagnetischer Strahlung auf die Zeitbereiche zu beschränken, in denen "Nutzsignale" tatsächlich zu übertragen sind; ansonsten wird das Mobilfunkendgerät "stumm" geschaltet.

Die Erfindung bezieht sich außerdem auf eine Basisstation mit einer Sendeeinrichtung, die nach einem vorgegebenen Funkstandard, insbesondere dem DECT-Standard, arbeitet.

Der Erfindung liegt bezüglich einer solchen Basisstation die Aufgabe zugrunde, diese zu verbessern; insbesondere soll die gesundheitliche Belastung bei der Benutzung derartiger Basisstationen reduziert werden.

Diese Aufgabe wird erfindungsgemäß durch die kennzeichnenden Merkmale des Anspruchs 7 gelöst. Vorteilhafte Ausgestaltungen der erfindungsgemäßen Basisstation sind in auf den Anspruch 7 rückbezogenen Unteransprüchen beschrieben.

Ein wesentlicher Vorteil der erfindungsgemäßen Basisstation ist darin zu sehen, dass diese in eine weitere Betriebsart umgeschaltet werden kann, in der weniger Strahlungsleistung als üblicherweise erzeugt wird. In dieser weiteren Betriebsart ist die Strahlungsbelastung somit für sich in der Nähe der Basisstation befindliche Personen geringer als in der Normalbetriebsart.

Erfindungsgemäß ist vorgesehen, dass diese mit zumindest zwei Sendeleistungspegeln betrieben werden kann, wobei der jeweilige Sendeleistungspegel von der Empfangsqualität der Verbindung zwischen dem Mobilfunkendgerät bzw. den Mobilfunkendgeräten und der Basisstation bestimmt wird.

Vorzugsweise misst die Basisstation die jeweilige Empfangsqualität der von dem oder den Mobilfunkendgeräten empfangenen Signalen und stellt den Sendeleistungspegel entsprechend derart ein, dass bei schlechter Empfangsqualität ein hoher Sendeleistungspegel und bei guter Empfangsqualität ein niedrigerer Leistungspegel ausgewählt wird.

Besonders einfach und damit vorteilhaft kann zur Bestimmung der Empfangsqualität der Signalpegel der Empfangssignale herangezogen werden. Beispielsweise kann die Höhe der empfangenen Signalpegel unmittelbar als Maß für die Empfangsqualität interpretiert und bewertet werden.

Vorteilhafte ist die Basisstation derart ausgestaltet, das es selbsttätig oder benutzerseitig initiiert zu einem Umschalten von der Normalbetnebsart in die weitere Betriebsart und umgekehrt kommt. Bei einer solchen Ausgestaltung der Basisstation ist somit gewährleistet, dass der Benutzer selbst entscheiden kann, in welcher Betriebsart die Basisstation betrieben werden soll; darüber hinaus kann - je nach den Betriebsbedingungen - die Basisstation "selber" entscheiden, welche Betriebsart die günstigste ist und den Sendebetrieb entsprechend umschalten.

Gemäß einer Variante ist vorgesehen, dass im Falle eines Sendebetriebs nach dem DECT-Standard die Sendebursts in der weiteren Betriebsart ausschließlich auf die Frames 0 und 8 beschränkt werden. Ein Senden innerhalb der Frames 0 und 8 ist erforderlich, wenn eine Synchronisation zwischen den Mobilfunkendgeräten und der Basisstation aufrechterhalten werden soll. Über die Frames 0 und 8 können beispielsweise Qt-Meldungen übertragen werden.

Im Ergebnis sendet die Basisstation somit lediglich alle 80 ms Informationen aus, so dass es zu einer sehr reduzierten Ausstrahlung elektromagnetischer Strahlung kommt. Dabei wird jedoch aufgrund des Aussendens von Sendebursts in den Frames 0 und 8 sichergestellt, dass eine Synchronisation zwischen der Basisstation und den Mobilfunkendgeräten aufrecht erhalten bleibt.

Gemäß einer weiteren Variante ist vorgesehen, dass diese ausschließlich einmal in der Sekunde elektromagnetische Strahlung erzeugt. Bei entsprechender Anpassung der Synchronisationsalgorithmen ist es nämlich möglich, eine Synchronisation zwischen der Basisstation und den Mobilfunkendgeräten selbst dann zu erreichen, wenn eine Synchronisation nur einmal pro Sekunde erfolgt.

Gemäß einer weiteren Variante ist vorgesehen, dass die Basisstation derart ausgestaltet ist, dass sie ihre Sendeeinrichtung abschaltet, sobald das Mobilfunkendgerät mit der Ladeschale der Basisstation in Verbindung tritt, sofern lediglich ein einziges Mobilfunkendgerät an der Basisstation angemeldet ist.

Die Information bzw. das entsprechende Signal, dass sich das Mobilfunkendgerät in der Ladeschale der Basisstation befindet, kann dabei von dem Mobilfunkendgerät erzeugt und an die Basisstation - beispielsweise über die Ladekontakte und/oder über zusätzliche Kontakte - übertragen werden.

Alternativ kann die Basisstation den Ladestrom der Ladeschale selbst überwachen und bei Vorliegen eines Ladestroms ihre Sendeeinrichtung ausschalten. Darüber hinaus kann die Basisstation - beispielsweise über die Ladekontakte und/oder über zusätzliche Kontakte - dem Mobilfunkendgerät ein Steuersignal zum Abschalten der mobilfunkendgeräteseitigen Sendeeinrichtung übermitteln, woraufhin das Mobilfunkendgerät dann seine Sendeeinrichtung abschaltet.

Zur allgemeinen Erläuterung sowie zur Erläuterung der Erfindung zeigen die nach folgenden Figuren verschiedene Mobilfunkendgeräte und Basisstationen. In den Figuren werden für alle identischen bzw. vergleichbaren Komponenten dieselben Bezugszeichen verwendet.

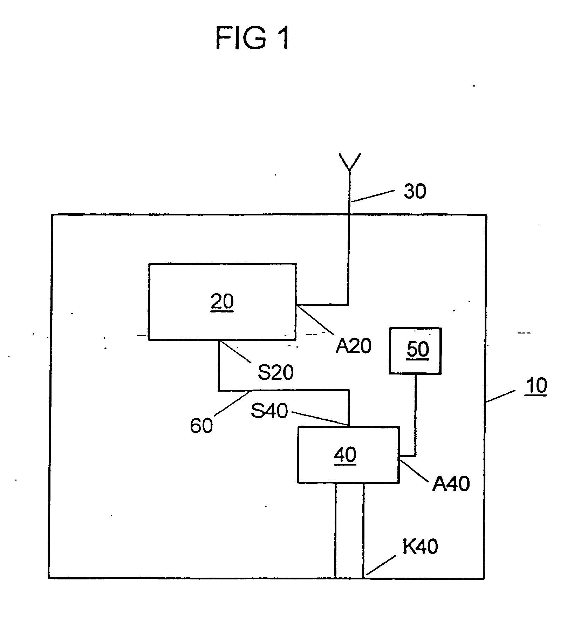

In der Figur 1 erkennt man ein Mobilfunkendgerät 10 mit einer Sende-/Empfangseinrichtung 20. Ein Antennenanschluss A20 der Sende-/Empfangseinrichtung 20 ist mit einer Antenne 30 des Mobilfunkendgerätes verbunden. Ein Steueranschluss S20 der Sende- und Empfangseinrichtung 20 ist mit einem Steueranschluss S40 einer Steuereinrichtung 40 verbunden. Die Steuereinrichtung 40 weist darüber hinaus Ladekontakte K40 auf, mit denen das Mobilfunkendgerät 10 an Ladekontakte einer Ladeschale einer in der Figur 1 nicht gezeigten Basisstation anschließbar ist.

Die Steuereinrichtung 40 ist darüber hinaus über ihren Akkuanschluss A40 an einen Akkumulator bzw. eine Batterie 50 angeschlossen.

Das Mobilfunkendgerät gemäß der Figur 1 wird wie folgt betrieben. Sobald das Mobilfunkendgerät 10 in eine Ladeschale einer in der Figur 1 nicht dargestellten Basisstation eingelegt wird, fließt über die Ladekontakte K40 und die Steuereinrichtung 40 ein Ladestrom zum Akku 50. Sobald ein solcher Ladestrom von der Steuereinrichtung 40 detektiert wird, schaltet die Steuereinrichtung 40 die Sende-/Empfangseinrichtung 20 über die Steuerleitung 60 ab, so dass keine elektromagnetische Sendestrahlung mehr erzeugt wird.

Die Steuereinrichtung 40 macht sich dabei zunutze, dass bei einem Aufliegen des Mobilfunkendgerätes 10 in der Ladeschale der Basisstation keine Funkverbindung zu der Basisstation aufgebaut sein muss, da gegebenenfalls Steuersignale von der Basisstation zur Steuereinrichtung 40 bzw. umgekehrt auch über die Ladekontakte K40 übertragen werden können. Hierzu ist die Steuereinrichtung 40 entsprechend ausgestaltet, so dass sie durch ein von der Basisstation über die Ladekontakte K40 zur Steuereinrichtung 40 übertragenen "Aufwecksignal" derart umgeschaltet wird, dass sie die Sendeeinrichtung 20 wieder voll in Betrieb nimmt, so dass eine Funkverbindung zwischen der Sendeeinrichtung 20 und der Basisstation aufgebaut werden kann.

Zusammengefasst schaltet die Steuereinrichtung 40 die Sende-/Empfangseinrichtung 20 ab, sobald das Mobilfunkendgerät 10 in einer Ladeschale einer Basisstation aufliegt.

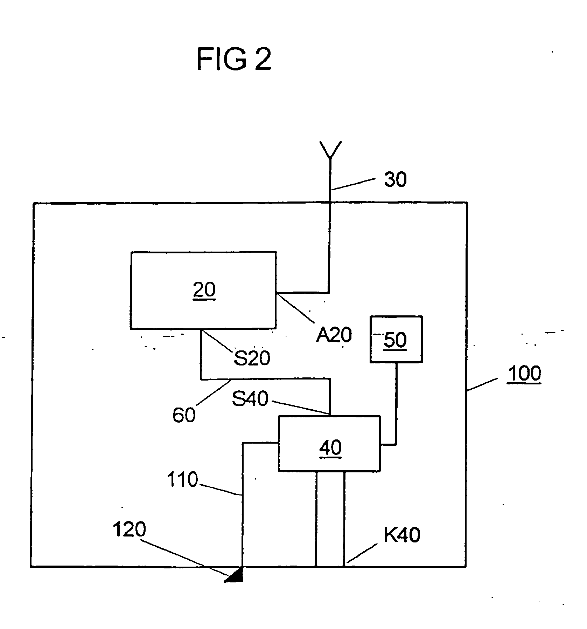

In der Figur 2 ist ein Mobilfunkendgerät 100 dargestellt, dessen Steuereinrichtung 40 mittels einer Steuerleitung 110 mit einem federnd gelagerten Schaltelement 120 verbunden ist. Sobald das Mobilfunkendgerät 100 in die Ladeschale einer Basisstation eingeführt wird, wird das elektrische Schaltelement 120 umgeschaltet. Durch dieses Umschalten des elektrischen Schaltelements 120 wird der Steuereinrichtung 40 signalisiert, dass das Mobilfunkendgerät 100 in der Ladeschale der Basisstation liegt. Sofort anschließend schaltet dann die Steuereinrichtung 40 die Sende-/Empfangseinrichtung 20 über die Steuerleitung 60 ab, so dass bei einem Aufliegen des Mobilfunkendgerätes 100 in der Ladeschale keine elektromagnetische Strahlung durch die Sende-/Empfangseinrichtung 20 generiert wird.

Im Übrigen entspricht das Mobilfunkendgerät 100 gemäß der Figur 2 dem Mobilfunkendgerät 10 gemäß der Figur 1.

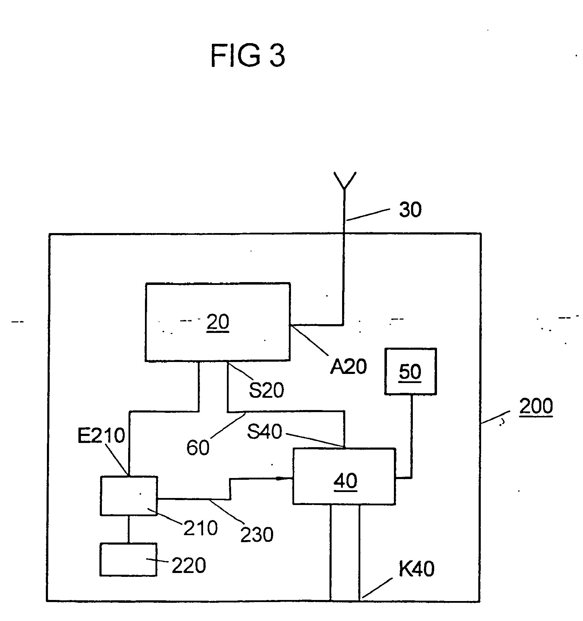

In der Figur 3 erkennt man ein Mobilfunkendgerät 200, das eine Empfangspegelmesseinrichtung 210 aufweist. Die Empfangspegelmesseinrichtung 210 ist mit einem Eingang E210 an die Sende-/Empfangseinrichtung 20 angeschlossen und misst den jeweiligen Empfangspegel der von der Sende-/Empfangseinrichtung 20 empfangenen Empfangssignale.

Die von der Empfangspegelmesseinhchtung 210 gemessenen Empfangspegel werden mit vorgegebenen, in einem mit der Empfangspegelmesseinrichtung 210 verbundenen Speicher 220 gespeicherten Referenzwerten verglichen. Je nach dem Vergleichsergebnis wird über eine Verbindungsleitung 230 zwischen der Empfangspegelmesseinrichtung 210 und der Steuereinrichtung 40 die Steuereinrichtung 40 derart angesteuert, dass diese über ihre Steuerleitung 60 der Sende-/Empfangseinrichtung 20 den jeweils einzuhaltenden Sendeleistungspegel mitteilt.

Konkret wird die Empfangspegelmesseinrichtung 210 die Steuereinrichtung 40 derart ansteuern, dass bei einem nur geringen Empfangspegel der von der Sende-/Empfangseinrichtung 20 empfangenen Signale die Sende-/Empfangseinrichtung 20 mit einer hohen Sendeleistung sendet; denn bei einem nur sehr kleinen Empfangspegel ist davon auszugehen, dass die Übertragungsverbindung zwischen dem Mobilfunkendgerät 200 und der jeweiligen Basisstation sehr schlecht ist, so dass zum Übertragen von Signalen eine hohe Sendeleistung erforderlich ist.

Stellt die Empfangspegelmesseinrichtung 210 hingegen fest, dass ein sehr hoher Empfangspegel der von der Sende-/Empfangseinrichtung 20 empfangenen Signale vorliegt, so steuert sie über die Leitung 230 die Steuereinrichtung 40 derart an, dass diese wiederum über die Steuerleitung 60 den Sende-/Empfangseinrichtung 20 eine nur geringe Sendeleistung vorgibt.

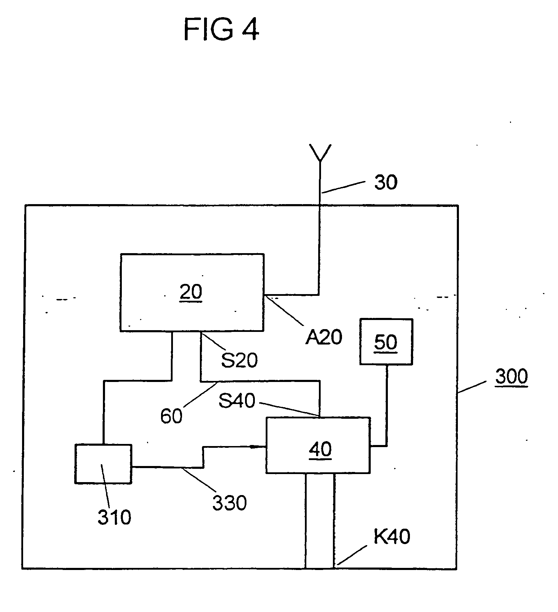

In der Figur 4 ist ein Ausführungsbeispiel für ein Mobilfunkendgerät 300 dargestellt, das mit einer Decodiereinrichtung 310 ausgestattet ist. Die Decodiereinrichtung 310 ist eingangsseitig mit der Sende-/Empfangseinrichtung 20 und ausgangsseitig mit der Steuereinrichtung 40 verbunden.

Die Decodiereinrichtung 310 wertet die von der Sende-/Empfangseinrichtung 20 empfangenen Signale der Basisstation aus und prüft, ob in den Empfangssignalen ein Steuersignal von der Basisstation enthalten ist, mit dem eine vorgegebene Sendeleistung bzw. ein vorgegebener Sendeleistungspegel für die Sende-/Empfangseinrichtung 20 des Mobilfunkendgerätes 300 enthalten ist.

Falls dies der Fall ist, so erzeugt die Decodiereinrichtung 310 ein entsprechendes Steuersignal S und überträgt dieses über die Steuerleitung 320 zu der Steuereinrichtung 40, die wiederum die Sende-/Empfangseinrichtung 20 derart ansteuert, dass die von der Basisstation vorgegebene Sendeleistung bzw. der entsprechende Sendesignalpegel von der Sende-/Empfangseinrichtung 20 eingehalten wird.

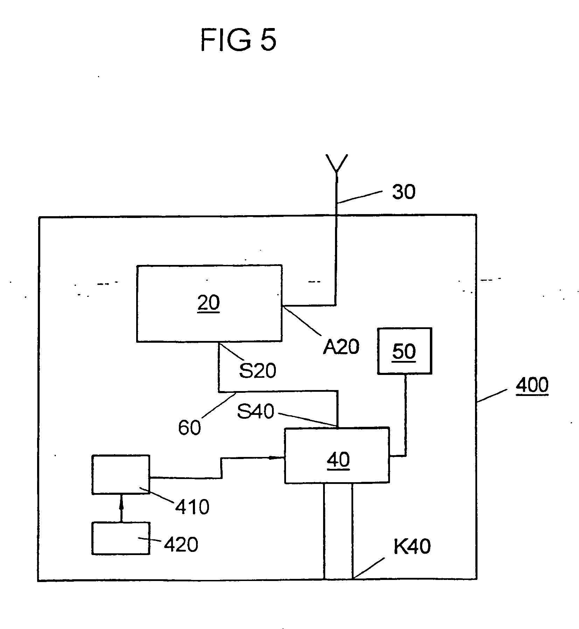

In der Figur 5 ist ein Mobilfunkendgerät 400 dargestellt, das mit einer Sprachfiltereinrichtung 410 ausgestattet ist. Die Sprachfiltereinrichtung 410 ist eingangsseitig mit einem Mikrofon 420 und ausgangsseitig mit der Steuereinrichtung 40 verbunden.

Die Funktion der Sprachfiltereinrichtung 410 besteht darin, die von dem Mikrofon 420 erzeugten Audiosignale dahingehend zu filtern, dass ausschließlich Sprachsignale zu der Steuereinrichtung 40 gelangen. Andere Audiosignale, wie beispielsweise Umgebungsrauschen und dergleichen, werden von der Sprachfiltereinrichtung 410 herausgefiltert und unterdrückt, so dass diese Audiosignalanteile nicht zu der Steuereinrichtung 40 gelangen können.

Die Steuereinrichtung 40 ist in dem Mobilfunkendgerät 400 darüber hinaus derart ausgestaltet, dass es die Sende-/Empfangseinrichtung 20 ausschließlich dann elektromagnetische Sendeleistung erzeugen lässt, wenn von der Sprachfiltereinrichtung 410 Sprachsignale "geliefert" werden. Liegen in der Steuereinrichtung 40 hingegen keine Sprachsignale seitens der Sprachfiltereinrichtung 410 vor, so steuert die Steuereinrichtung 40 die Sende-/Empfangseinrichtung 20 derart an, dass keine elektromagnetischen Wellen über die Antenne 30 abgestrahlt werden.

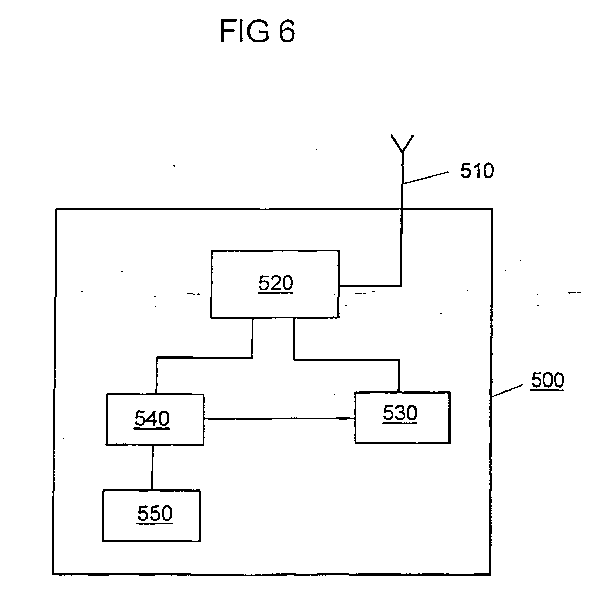

In der Figur 6 ist eine Basisstation 500 dargestellt, die eine Antenne 510, eine mit der Antenne in Verbindung stehende Senden/Empfangseinrichtung 520 und eine mit der Sende-/Empfangseinrichtung 520 verbundene Steuereinrichtung 530 ausweist.

Die Basisstation 500 ist darüber hinaus mit einer Empfangspegelmesseinrichtung 540 ausgestattet, die eingangsseitig mit der Sende-/Empfangseinrichtung 520 und ausgangsseitig mit der Steuereinrichtung 530 verbunden ist. Die Empfangspegelmesseinrichtung 540 hat die Aufgabe, die von der Sende-/Empfangseinrichtung 520 empfangenen Signale der mit der Basisstation 500 in Verbindung stehenden Mobilfunkendgeräte bezüglich des Empfangssignalpegels auszuwerten; konkret misst die Empfangspegelmesseinrichtung 540 fortlaufend die Signalpegel der empfangenen Signale und vergleicht die Empfangspegel mit in einem Speicher 550 abgespeicherten, vorgegebenen Referenzwerten.

Stellt die Empfangspegelmesseinrichtung 540 dabei fest, dass beispielsweise die gemessenen Empfangspegel einen vorgegebenen Grenzwert unterschreiten, so steuert sie die Steuereinrichtung 530 derart an, dass diese der Sende-/Empfangseinrichtung 520 einen besonders hohen Sendepegel vorgibt. Konkret wird durch die Empfangspegelmesseinrichtung 540 erreicht, dass je nach den Sende-/Empfangsbedingungen der Übertragungsstrecke zwischen der Basisstation 500 und den angeschlossenen Mobilfunkendgeräten ein passender Sendesignalpegel für die Sende-/Empfangseinrichtung 520 eingestellt wird. Der von der Sende-/Empfangseinrichtung 520 abgegebene Sendesignalpegel ist dabei davon abhängig, wie hoch der jeweils empfangene Signalpegel der Empfangssignale ist. Ziel dieser Maßnahme ist dabei, dass stets mit der geringstmöglichen Sendeleistung gesendet wird, um die Strahlungsbelastung durch die Basisstation so gering wie möglich zu halten.

Im Übrigen kann die Basisstation 500 derart ausgestaltet sein, dass sie in Zeitintervallen, in denen keine Telefongespräche zu übertragen sind, lediglich einmal in der Sekunde Synchronisationssignale an die Mobilfunkendgeräte ausstrahlt.

Darüber hinaus kann die Basisstation 500 derart ausgestaltet sein, dass sie Sendebursts zum Synchronisieren der an die Basisstation 500 angeschlossenen Mobilfunkendgeräte ausschließlich in den Frames 0 und 8 im DECT-Standard übersendet.

In den Figuren 1 bis 6 ist die Funktionsweise des erfindungsgemäßen Mobilfunkendgerätes und der erfindungsgemäßen Basisstation anhand von schematischen Blockschaltbildern erläutert. Die gezeigten und erläuterten Blöcke können durch separate Funktionseinheiten gebildet sein; stattdessen kann die Funktion einzelner oder ggf. auch aller Blöcke durch einen oder ggf. mehrere Mikroprozessoren oder sonstige integrierte Schaltungen übernommen werden.

Bei den Mobilfunkendgeräten gemäß den Figuren 1 bis 5 handelt es sich bevorzugt um DECT-Mobilteile schnurloser DECT-Telefone. Bei der Basisstation gemäß der Figur 6 handelt es sich bevorzugt um eine DECT-Basisstation eines schnurlosen DECT-Telefons.

Bezugszeichen
- 10: Mobilfunkendgerät
- 20: Sende-/Empfangseinrichtung
- 40: Steuereinrichtung
- 50: Akku
- 60: Steuerleitung
- 100: Mobilfunkendgerät
- 110: Leitung
- 120: Schaltelement
- 200: Mobilfunkendgerät
- 210: Empfangspegelmesseinrichtung
- 220: Speicher
- 230: Steuerleitung
- 300: Mobilfunkengerät
- 310: Decodiereinrichtung
- 320: Steuerleitung
- 400: Mobilfunkendgerät
- 410: Sprachfiltereinrichtung
- 420: Mikrofon
- 500: Basisstation
- 510: Antenne
- 520: Sende-/Empfangseinrichtung
- 530: Steuereinrichtung
- 540: Empfangspegelmesseinrichtung
- 550: Speicher
- K40: Ladekontakte
- S40: Steueranschluss
- A40: Akku-Anschluss
- A20: Antennenanschluss

## Patentansprüche

1. . Mobilfunkendgerät (10, 100, 200, 300, 400) mit einer Sendeeinrichtung (20), die zumindest nach einem vorgegebenen Mobilfunkstandard, insbesondere dem DECT-Standard, arbeitet,
wobei
das Mobilfunkendgerät (10, 100, 200, 300, 400) zumindest zwei Betriebsarten aufweist, nämlich eine Normalbetriebsart und mindestens eine weitere Betriebsart, bei der im Vergleich zur Normalbetriebsart zumindest im zeitlichen Mittel weniger elektromagnetische Strahlung erzeugt wird als in der Normalbetriebsart,
**dadurch gekennzeichnet, dass** das Mobilfunkendgerät (200) derart ausgestaltet ist, dass es mit zumindest zwei Sendeleistungspegeln betrieben werden kann, wobei der jeweilige Sendeleistungspegel von der Übertragungsqualität der Verbindung zwischen der Mobilfunkeinrichtung (200) und der zugeordneten Basisstation bestimmt ist.

2. . Mobilfunkendgerät nach Anspruch 1, **dadurch gekennzeichnet, dass** das Mobilfunkendgerät (200) nach einem Empfangen eines Steuersignals der Basisstation den jeweils von der Basisstation mittels des Steuersignals vorgegebenen Sendeleistungspegel einstellt.

3. . Mobilfunkeinrichtung nach Anspruch 1 oder 2, **dadurch gekennzeichnet, dass** das Mobilfunkendgerät die jeweilige Empfangsqualität der von der Basisstation gesendeten Signale misst und seinen eigenen Sendeleistungspegel entsprechend derart einstellt, dass bei schlechter Empfangsqualität ein hoher Sendeleistungspegel und bei guter Empfangsqualität ein niedriger Sendeleistungspegel ausgewählt wird.

4. . Mobilfunkendgerät nach Anspruch 3, **dadurch gekennzeichnet, dass** das Mobilfunkendgerät als Maß für die Empfangsqualität den Signalpegel des Empfangssignals heranzieht.

5. . Mobilfunkendgerät nach Anspruch 4, **dadurch gekennzeichnet, dass** die Höhe des Signalpegels des Empfangssignals unmittelbar als Empfangsqualitätsmesswert bewertet wird.

6. . Mobilfunkendgerät nach Anspruch 1, **dadurch gekennzeichnet, dass** das Mobilfunkendgerät (10, 100, 200, 300, 400) derart ausgestaltet ist, dass es selbsttätig oder benutzerseitig von der Normalbetriebsart in die weitere Betriebsart und/oder umgekehrt umschaltbar ist.

7. . Basisstation mit einer Sendeeinrichtung, die nach einem vorgegebenen Funkstandard, insbesondere dem DECT-Standard arbeitet, wobei die Basisstation (500) zumindest zwei Betriebsarten aufweist, nämlich eine Normalbetriebsart und mindestens eine weitere Betriebsart, bei der im Vergleich zur Normalbetriebsart zumindest im zeitlichen Mittel weniger Strahlung erzeugt wird als in der Normalbetriebsart,
**dadurch gekennzeichnet, dass** die Basisstation (500) derart ausgestaltet ist, dass sie den Empfangspegel der Empfangssignale misst und die Sendeleistung in Abhängigkeit von dem Signalpegel der empfangenen Signale derart wählt, dass bei schlechter Empfangsqualität ein hoher. Sendeleistungspegel und bei guter Empfangsqualität ein niedriger Sendeleistungspegel ausgewählt wird.

8. . Basisstation nach Anspruch 7, **dadurch gekennzeichnet, dass** die Basisstation (500) derart ausgestaltet ist, dass sie selbsttätig oder benutzerseitig von der Normalbetriebsart in die weitere Betriebsart und/oder umgekehrt umschaltbar ist.

9. . Basisstation nach einem der vorangehenden Ansprüche 7 bis 8, **dadurch gekennzeichnet, dass** die Basisstation mobilfunkendgeräteindividuell den Empfangspegel der Empfangssignale misst und daraus einen Soll-Sendeleistungspegel für jedes Mobilfunkendgerät bestimmt und ein den Soll-Sendeleistungspegel vorgebendes Steuersignal an das jeweilige Mobilfunkendgerät sendet.
